# EUROPEAN PATENT APPLICATION

(11) **EP 4 641 758 A1**
(43) Date of publication of application: **29.10.2025**
(21) Application number: 24214804.7
(22) Date of filing: 22.11.2024
(51) Int. Cl.: H01M 10/61, H01M 10/643, H01M 10/6555, H01M 50/213, H01M 50/291, H01M 50/30, H01M 50/505, H01M 50/55, H01M 50/571

(54) **BATTERY PACK**

(30) Priority: 25.04.2024 CN 202420878870 U
(71) Applicant: CALB Group Co., Ltd., Changzhou City, Jiangsu Province (CN)
(72) Inventor: YANG, Xulong, Changzhou City, Jiangsu Province (CN); WANG, Shuaifeng, Luoyang City, Henan Province (CN); LI, Ran, Changzhou City, Jiangsu Province (CN); JIANG, Hao, Changzhou City, Jiangsu Province (CN)
(74) Representative: Becker, Eberhard

(57) **Abstract**

A battery pack is provided, the battery pack including a box (10), at least one battery row (20), a heat exchange plate (30), a bus member (40) and a limit plate (50); the axis of a plurality of cylindrical batteries (21) of the battery row (20) is parallel to the bottom of the battery box (10); the bus member (40) is configured for electrically connecting the plurality of cylindrical batteries (21); the limit plate (50) is configured for limiting the battery; wherein a peripheral wall (203) located between a first end wall (201) of the cylindrical battery (21) and a second end wall (202) of the cylindrical battery (21); the heat exchange plate (30) is disposed opposite to the first end wall (201); the bus member (40) is disposed opposite to the second end wall (202); and the limit plate (50) is disposed opposite to the peripheral wall (203).

## Description

### Technical Field

The present disclosure relates to the technical field of batteries, and more particularly, to a battery pack.

### Background Art

A battery pack is often provided in an electric vehicle, and the battery pack is used to provide power to the electric vehicle. The battery pack includes a plurality of batteries, a bus member for electrically connecting the plurality of batteries, and a heat exchange plate for exchanging heat with the batteries, for example, to cool or heat the batteries. In the related art, when the bus member contacts with the heat exchange plate, condensation is generated when the heat exchange plate cools the battery, and the condensation may cause a short circuit of the battery pack after the condensation flows to the heat exchange plate.

It should be noted that the information disclosed in the background section above is only intended to enhance an understanding of the background of the present disclosure and thus may include information that does not constitute the prior art known to those of ordinary skill in the art.

### Summary of the Invention

An object of the present disclosure is to provide a battery pack to further reduce the risk of short circuit of the battery pack to at least some extent.

The present disclosure provides a battery pack, the battery pack including:
a box having a bottom plate;
at least one battery row, wherein the battery row is disposed in the box; the battery row includes a plurality of sequentially arranged cylindrical batteries; an axis of the cylindrical battery is parallel to the bottom of the battery box; a positive pole output end and a negative pole output end of the cylindrical battery are disposed on a same side of the cylindrical battery;
a heat exchange plate configured for exchanging heat with the battery;
a bus member configured for electrically connecting the plurality of cylindrical batteries;
a limit plate configured for limiting the battery in a direction perpendicular to the axis;
wherein the cylindrical battery has a first end wall and a second end wall disposed opposite to each other, and a peripheral wall located between the first end wall and the second end wall; the heat exchange plate is disposed opposite to the first end wall; the bus member is disposed opposite to the second end wall; and the limit plate is disposed opposite to the peripheral wall.

The embodiment of the present disclosure provides a battery pack, including a box, a battery row, a heat exchange plate, a bus member and a limit plate, wherein the box has a bottom plate; the battery row is disposed in the box, and the axis of a cylindrical battery in the battery row is parallel to the bottom plate; the cylindrical battery has a first end wall, a second end wall and a peripheral wall which are not coplanar; the heat exchange plate and the first end wall of the cylindrical battery are oppositely disposed; the bus member and the second end wall of the cylindrical battery are oppositely disposed; and the limit plate and the peripheral wall of the cylindrical battery are oppositely disposed. That is to say, the bus member and the heat exchange plate are disposed on different sides of the cylindrical battery, avoiding condensation on the heat exchange plate flowing to the bus member, and reducing the risk of short-circuiting of the battery pack. Also, the different sides of the bus member and the heat exchange plate are disposed in different sides to solve the problem that the bus member made of metal will be subject to repeated temperature differences on the same side of the bus member and the heat exchange plate, thereby causing metal fatigue which is not conducive to improving the reliability of the high-voltage connection.

Furthermore, the heat exchange plate, the bus member and the limit plate are respectively located on different sides of the cylindrical battery, so as to avoid the problem that the heat exchange plate, the bus member and the limit plate interfere with each other when the battery pack is assembled. The different side arrangements of the limit plate and the bus member solve the problem that when the limit plate and the bus member are disposed at the same side, the limit plate is required to be made of an insulating material due to the insulation requirements between the busbar and the limit plate, thus resulting in a low strength of the limit plate (the strength of the insulating material is often lower than that of the metal material). This improves the strength of the limit plate, and thus improves the stability of the internal structure of the battery pack. The arrangement of the limit plate and the heat exchange plate on different sides solves the problem of poor structural stability of the battery pack caused by the arrangement of the heat exchange plate and the limit plate on the same side, and improves the structural stability of the battery pack.

It should be understood that both the foregoing general description and the following detailed description are exemplary and explanatory only and are not restrictive of the disclosure.

### Brief Description of the Drawings

The accompanying drawings, which are incorporated in and constitute a part of this description, illustrate examples consistent with the disclosure and, together with the description, serve to explain the principles of the disclosure. It will be apparent that the drawings in the following description are only some examples of the invention, and that other drawings may be obtained from the drawings by those skilled in the art without any creative works.
Fig. 1 is a structurally schematic diagram of a battery pack according to an exemplary example of the present disclosure;
Fig. 2 is a structurally schematic diagram of a battery pack according to an exemplary example of the present disclosure;
Fig. 3 is a structurally schematic diagram of another battery pack according to an exemplary example of the present disclosure; and
Fig. 4 is a structurally schematic diagram of a limit plate according to an exemplary example of the present disclosure.

In the drawings,
10, box; 11, bottom plate; 12, border; 20, battery row; 21, cylindrical battery; 211, housing; 212, pole; 201, first end wall; 202, second end wall; 203, peripheral wall; 30, heat exchange plate; 40, bus member; 41, busbar; 50, limit plate; 51, body portion; 52, extension portion.

### Detailed Description of the Invention

A clear and complete description of the technical solution in the exemplary example of the present disclosure is provided by the accompanying drawings in the exemplary example of the present disclosure. The example embodiments described herein are for illustrative purposes only and are not intended to limit the scope of the present disclosure. Thus, it should be understood that various modifications and changes may be made to the example embodiments without departing from the scope of the present disclosure.

In the description of the present disclosure, the terms "first" and "second" are used for descriptive purposes only and are not to be construed as indicating or implying relative importance unless explicitly stated or limited otherwise. The term "plurality" means two or more than two. The term "and/or" includes any and all combinations of one or more of the associated listed items. In particular, reference to "the" object or "an" object is also intended to mean one of a possible plurality of such objects.

Unless otherwise specified or indicated, the terms "connected", "fixed", and the like are to be construed broadly, e.g., "connected" may be fixed, or may be detachable, or may be integral, or may be electrically connected, or connected by signals. The "connected" may be a direct connection or an indirect connection by an intermediary. The specific meaning of the above terms in the present disclosure will be understood in specific circumstances by those skilled in the art.

Further, in the description, it should be understood that the terms "on", "under", "inside ", "outside", and the like in the description of the exemplary examples of the present disclosure are used from the angle shown in the accompanying drawings only and are not to be construed as limiting the embodiments of the present disclosure. It will also be understood that when an element or feature is referred to as connected "on", "under", or "inside" or "outside" another element(s), it can be directly connected connected "on", "under", or "inside" or "outside" the other element(s), but also indirectly connected connected "on", "under", or "inside" or "outside" the other element(s) through intervening elements.

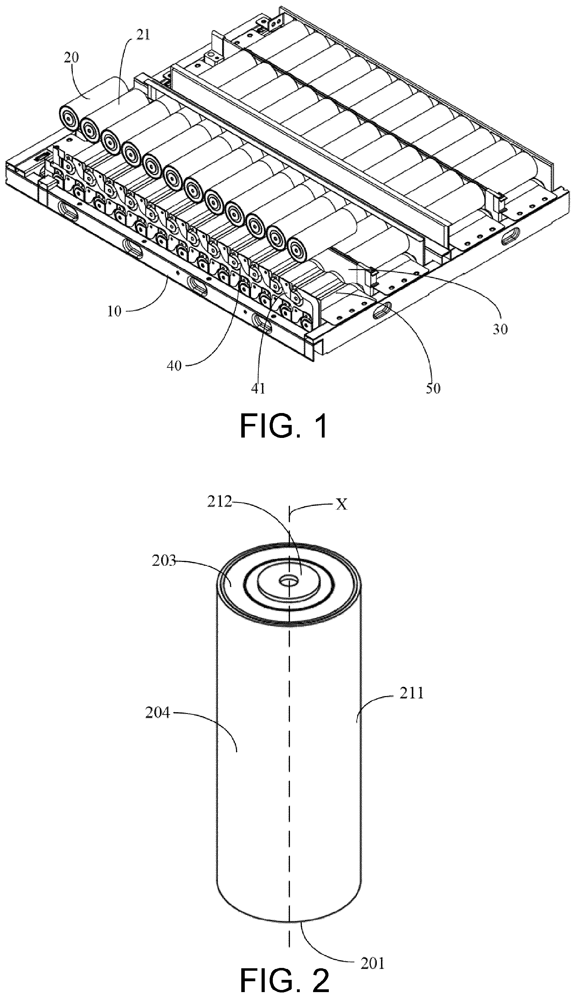

An exemplary example of the present disclosure provides a battery pack, as shown in Figs. 1 and 2, including a box 10, at least one battery row 20, a heat exchange plate 30, a bus member 40 and a limit plate 50. The box 10 has a bottom plate 11; the battery row 20 is arranged in the box 10. The battery row 20 includes a plurality of sequentially arranged cylindrical batteries 21. The axis of the cylindrical batteries 21 is parallel to the bottom of the battery box. A positive output end and a negative output end of the cylindrical batteries 21 are disposed on the same side of the cylindrical batteries 21. The heat exchange plate 30 is configured for exchanging heat with the battery. The bus member 40 is configured for electrically connecting a plurality of cylindrical batteries 21. The limit plate 50 is configured for limiting the battery in a direction perpendicular to the axis.

Herein, the cylindrical battery 21 has a first end wall 201 and a second end wall 202 disposed opposite to each other, and a peripheral wall 203 located between the first end wall and the second end wall. The heat exchange plate 30 is disposed opposite to the first end wall 201. The bus member 40 is disposed opposite to the second end wall 202. The limit plate 50 is disposed opposite to the peripheral wall 203.

The example of the present disclosure provides a battery pack, including a box 10, a battery row 20, a heat exchange plate 30, a bus member 40 and a limit plate 50. The box 10 has a bottom plate 11. The battery row 20 is disposed in the box 10, and the axis of the cylindrical battery 21 in the battery row 20 is parallel to the bottom plate 11. The cylindrical battery 21 has a non-coplanar first end wall 201, a second end wall 202 and a peripheral wall 203, the heat exchange plate 30 is disposed opposite to the first end wall 201. The bus member 40 is disposed opposite to the second end wall 202. The limit plate 50 is disposed opposite to the peripheral wall 203. That is to say, the bus member 40 and the heat exchange plate 30 are disposed on different sides of the cylindrical battery 21, so that condensation on the heat exchange plate 30 is prevented from flowing to the bus member 40, and the risk of short circuit of the battery pack is reduced. The bus member 40 and the heat exchange plate 30 are disposed on different sides, so that we solve the problem that the bus member 40 made of a metal material is subjected to repeated temperature differences on the same side of the bus member 40 and the heat exchange plate 30, and the generated metal fatigue is not conducive to improving the reliability of the high-voltage connection.

Furthermore, the heat exchange plate 30, the bus member 40 and the limit plate 50 are respectively located on different sides of the cylindrical battery 21, avoiding the problem that the heat exchange plate 30, the bus member 40 and the limit plate 50 interfere with each other when the battery pack is assembled. The different side arrangements of the limit plate 50 and the bus member 40 solve the problem that when the limit plate 50 and the bus member 40 are arranged at the same side, the limit plate 50 is required to be made of an insulating material due to the insulation requirements between the busbar 41 and the limit plate 50, thus resulting in a low strength of the limit plate 50 (the strength of the insulating material is often lower than that of the metal material). This improves the strength of the limit plate 50, and thus improves the stability of the internal structure of the battery pack. The arrangement of the limit plate 50 and the heat exchange plate on different sides solves the problem of poor structural stability of the battery pack caused by the arrangement of the heat exchange plate and the limit plate 50 on the same side, and improves the structural stability of the battery pack.

Furthermore, the heat exchange plate 30 and the bus member 40 are respectively disposed at the both ends of the cylindrical battery 21. The limit plate 50 is arranged on the peripheral wall 203 of the cylindrical battery 21, solving the problem when the heat exchange plate 30 is arranged on the outer annular surface of the cylindrical battery 21, it is difficult to ensure the fit between the arc surface and the heat exchange plate, and thus a higher heat exchange efficiency cannot be satisfied. If the heat exchange plate 30 is formed as an arc surface, the cost and the manufacturing difficulty are increased. Therefore, arranging the limit plate 50 on the outer annular surface is not only beneficial for the whole package mode, but also superior in cost.
Each part of the battery pack provided by examples of the present disclosure is described in detail below.

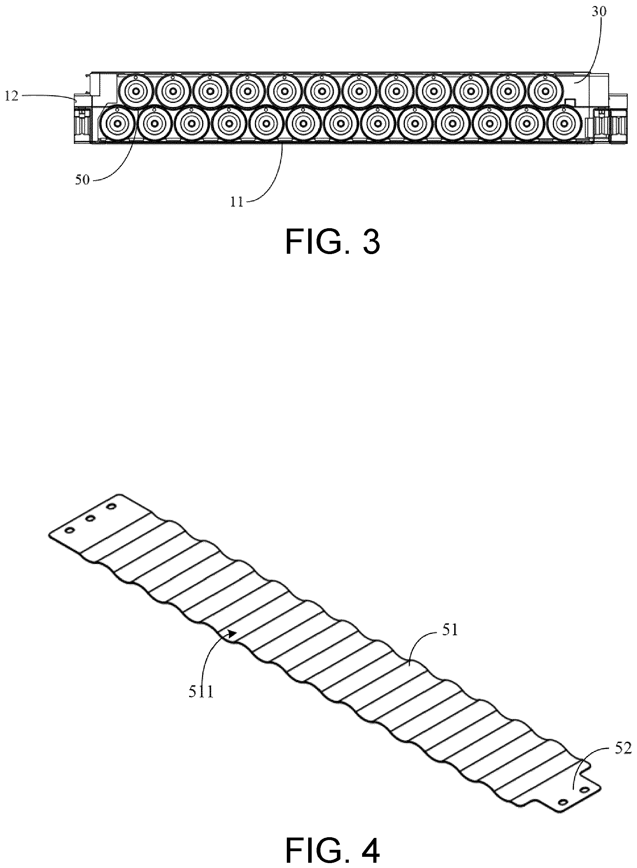

As shown in Fig. 3, the box 10 includes a bottom plate 11 and a border 12, wherein the border 12 is disposed on the bottom plate 11, and at least one battery compartment is formed on the bottom plate 11. The battery compartment is configured for accommodating components such as a battery row 20. As an example, the border 12 may be disposed on the top surface of the bottom plate 11, and the border 12 and the bottom plate 11 are connected by welding, riveting or bolting. Alternatively, the border 12 may surround the bottom plate 11, and the border 12 and the bottom plate 11 are connected by welding, riveting or bolting, etc.

The bottom plate 11 may have a single layer structure. For example, the bottom plate 11 is a support plate for supporting the battery. Alternatively, the bottom plate 11 may be a multi-layer composite structure. For example, the bottom plate 11 includes a support plate for supporting the battery, and a bottom guard plate disposed on a side of the support plate away from the battery row 20. The bottom guard plate is configured for sealing and protecting the support plate and the battery row 20.

The border 12 includes a plurality of structural beams disposed on the bottom plate 11 to form one or more battery compartments on the bottom plate 11. In a possible embodiment, the border 12 includes a plurality of side beams which are successively connected end to end to form a battery compartment. For example, the border 12 has a rectangular or approximately rectangular structure. The border 12 includes four side beams which are successively connected end to end to form a rectangular border 12.

In another possible embodiment, the border 12 includes a plurality of side beams and an intermediate beam. The plurality of side beams are successively connected end to end to form a border 12. The intermediate beam is disposed in the border 12. The intermediate beam divides the space in the border 12 into a plurality of battery compartments. For example, the border 12 is provided with an intermediate beam which divides the space in the border 12 into two battery compartments. Alternatively, two intermediate beams are disposed in the border 12, and the two intermediate beams are disposed vertically to divide the space in the border 12 into four battery compartments.

Alternatively, the border 12 may include a plurality of side beams and a division beam. The plurality of side beams are successively connected end to end to form the border 12. The division beam is disposed in the border 12. The division beam divides the space in the border 12 into a battery compartment and an electrical compartment. The battery compartment is configured for accommodating the battery row 20. The electrical compartment is configured for accommodating electrical elements such as a battery management system.

The battery row 20 is disposed in the box 10, and the battery row 20 includes a plurality of sequentially arranged cylindrical batteries 21. The axis of the cylindrical batteries 21 is perpendicular to the direction in which the batteries are arranged, and the axis of the batteries is parallel to the bottom plate 11. Illustratively, the plurality of cylindrical batteries 21 in the battery row 20 are aligned in a first direction. The axis of the cylindrical batteries 21 is disposed in a second direction. The second direction is perpendicular to the first direction, and the second direction is perpendicular to the bottom plate 11. The plurality of cylindrical batteries 21 in the battery row 20 are aligned, that is, the end faces of the plurality of cylindrical batteries 21 are flush with each other.

Note that, in the example of the present disclosure, the axis of the cylindrical battery 21 and the bottom plate 11 may be understood to be substantially parallel. That is, the cylindrical battery 21 and the bottom plate 11 are considered to be parallel when the angle between the axis of the cylindrical battery 21 and the bottom plate 11 is less than a preset angle. For example, if the angle between the cylindrical battery 21 and the bottom plate 11 is less than 10 degrees, the cylindrical battery 21 and the bottom plate 11 are considered to be parallel. The axis of the cylindrical battery 21 and the alignment direction of the battery may be understood to be substantially vertical. That is, if the angle between the axis of the cylindrical battery 21 and the alignment direction of the battery is within a preset range, the axis of the cylindrical battery 21 and the alignment direction of the battery may be considered to be vertical. For example, the preset range may be 85 degrees-95 degrees.

The plurality of battery rows 20 and the limit plate 50 may be installed in the box 10 in the form of a battery pack, and the battery pack includes two battery rows 20 and the limit plate 50 disposed between the battery rows 20. The heat exchange plate 30 is disposed between adjacent battery packs, and the heat exchange plate 30 is shared by two adjacent battery packs, so that the cost can be saved, and the space in the battery pack is advantageous for improving the energy density of the battery.

The cylindrical battery 21 has a non-coplanar first end wall 201, a second end wall 202 and a peripheral wall 203. The heat exchange plate 30 is disposed opposite to the first end wall 201 of the cylindrical battery 21. The bus member 40 is disposed opposite to the second end wall 202 of the cylindrical battery 21. The limit plate 50 is disposed opposite to the peripheral wall 203 of the cylindrical battery 21. The axis of the cylindrical battery 21 refers to the rotational symmetry axis of the circumferential battery. As shown in Fig. 2, the axis of the cylindrical battery is X.

For example, the cylindrical battery 21 may include a housing 211, a cell and a pole 212. The housing 211 is disposed with an accommodating cavity, the cell is disposed in the accommodating cavity, and the pole 212 is disposed in the housing 211. In the cylindrical battery 21, the pole 212 is an electrode terminal of the cylindrical battery 21, and the housing 211 is the other electrode terminal of the cylindrical battery 21. The cell is electrically connected to the pole 212 and the housing 211, respectively. For example, the pole 212 is a positive output end of the cell and the second end wall 202 of the housing 211 is a negative output end. Of course, in some embodiments, the housing 211 may also be provided with a first pole and a second pole, the first pole connected as a positive pole with a positive tab and the second pole connected as a negative pole with a negative tab. The first pole and the second pole are both disposed on the second end wall 202.

The housing 211 may include a first end plate, a second end plate and a cylinder. The cylinder has a hollow structure and both ends of the cylinder have openings. The first end plate and the second end plate are respectively plugged at the both ends of the cylinder. For example, the first end plate forms a first end wall 201 of the cylindrical battery 21. The second end plate forms a second end wall 202 of the cylindrical battery 21. The cylinder forms a peripheral wall 203 of the cylindrical battery 21. Of course, in practice, the first end wall 201, the second end wall 202, and the peripheral wall 203 may be distributed in other manners, and the examples of the present disclosure are not limited thereto.

Here, the pole 212 may be disposed at the first end plate. The cylinder and the first end plate are of an integrally formed structure, and the cylinder and the second end plate are of a separately formed structure. For example, the cylinder and the first end plate are integrally formed by stamping, and the second end plate and the cylinder are connected by welding or riveting. Alternatively, the cylinder and the first end plate are formed separately, and the cylinder and the second end plate are formed integrally. For example, the cylinder and the second end plate are formed integrally by stamping, and the first end plate and the cylinder are connected by welding or riveting, etc.

The housing 211 is made of a conductive material, and the material of the housing 211 may be steel, aluminum, nickel, cadmium, manganese, tungsten, or copper, etc. The materials of the first end plate, the second end plate and the barrel may be the same, or the materials of the first end plate, the second end plate and the barrel may be different.

The cell includes a cell body, a first tab and a second tab extending from the cell body, respectively. The first tab is electrically connected to the pole 212 and the second tab is electrically connected to the housing 211.

Optionally, a first tab and a second tab extend from an end of the cell body adjacent to the first end plate. On this basis, a current collector assembly is disposed between the cell body and the first end plate, and the current collector assembly includes a first current collector and a second current collector. The first current collector is connected to the first tab and the pole 212, and the second current collector is connected to the second tab and the housing 211.

Alternatively, the first tab may extend from an end of the cell body close to the first end plate. The second tab may extend from an end of the cell body close to the second end plate. The first tab may be connected to the pole 212 via the first current collector. The second tab may be connected to the housing 211 via the second current collector.

Note that in the disclosed embodiment, the cylindrical battery 21 is not limited to having the pole 212 as one electrode and the housing 211 as the other electrode. For example, a first pole and a second pole may be provided on the housing 211. The first pole and the second pole are insulated. The first pole is connected to the first tab, and the second pole is connected to the second tab.

The cell may be a wound cell including a first pole piece, a second pole piece and a separator piece. The first pole piece and the second pole piece have opposite electrical properties. For example, the first pole piece is a positive pole piece and the second pole piece is a negative pole piece. The separator is disposed between the first pole piece and the second pole piece, and wound to obtain a wound cell. Of course, in practical applications, the cell may also be a laminated cell, and the embodiments of the present disclosure are not limited thereto.

In a possible embodiment, the cylindrical battery 21 is a lithium iron phosphate battery, the dimension of the cylindrical battery 21 along the axis being greater than or equal to 60 mm. In practice, the size of the cylindrical lithium iron phosphate battery in the single battery directly affects the cost of the battery. The larger the single battery is, the more cost advantage it has. Therefore, by setting the size of the cylindrical battery 21 along the axis to 60 mm or more, the cost of the battery can be effectively controlled. Setting the axis of the cylindrical battery 21 to be parallel to the bottom plate 11 effectively saves space in the height direction and solves the problem of insufficient installation space in the vehicle height direction due to the excessive height of the unit battery.

Herein, the dimension of the cylindrical battery 21 along the axis is L. The dimension of the battery pack along the height direction is H. The height direction is perpendicular to the bottom plate 11. L > H. Further, L > 2H. Setting the axis of the cylindrical battery 21 to be parallel to the bottom plate 11 not only ensures that a large single cylindrical battery 21 has a cost advantage, but also effectively saves space in the height direction and solves the problem of insufficient installation space in the vehicle height direction due to the excessive height of the unit battery.

The explosion proof valve is provided on the cylindrical battery 21, and the explosion proof valve is not provided on the first end wall 201 of the cylindrical battery 21, so as to avoid the problem that explosion of the explosion proof valve may damage the heat exchange plate 30 and even cause the outflow of the cooling medium to cause short circuit and thermal runaway.

Illustratively, the pole 212 of the cylindrical battery 21 and the explosion proof valve are disposed in the second end wall 202. The explosion proof valve may be a thinned portion or score or the like provided on the second end wall 202 of the cylindrical battery 21. Both the explosion proof valve and the pole 212 are away from the heat exchange plate 30, and both are integrated on the end wall of the connected bus member 40 of the cylindrical battery, so that when the explosion proof valve is opened, the electrical connection between the valve-opening single battery and other single batteries or the electrical connection between the pole of the valve-opening single battery itself and the inside of the cell is disconnected.

The heat exchange plate 30 is disposed on one side of a first end wall 201 of the cylindrical battery 21. The bus member 40 is disposed on a side of a second end wall 202 of the cylindrical battery 21, and the limit plate 50 is disposed on a side of a peripheral wall 203 of the cylindrical battery 21. That is, the heat exchange plate 30 and the first end wall 201 of the cylindrical battery 21 are opposed to each other, and the heat exchange plate 30 and the first end wall 201 of the cylindrical battery 21 are connected (e.g., abutted against each other or connected by a thermally conductive glue). The bus member 40 and the second end wall 202 of cylindrical battery 21 are opposed to each other, and the bus member 40 is connected (e.g., welded) to second end wall 202 of the cylindrical battery 21. The limit plate 50 and the peripheral wall 203 of the cylindrical battery 21 are opposed to each other, and the limit plate 50 is connected to the peripheral wall 203 of the cylindrical battery 21 (e.g., abutted against each other or connected by a bonding glue).

The heat exchange plate 30 has a flat plate structure. A flow passage is disposed in the heat exchange plate 30, and used for transmitting a heat exchange medium. For example, the heat exchange plate 30 is a heat exchange plate. A medium channel is provided in the heat exchange plate, and the medium channel is used for transmitting a heat exchange medium. A plurality of medium channels may be provided in the heat exchange plate, the plurality of medium channels extending along the length of the heat exchange plate. The heat exchange plate 30 with the flat plate structure has less manufacture difficulty, low cost, and high reliability.

The heat exchange plate may have a rectangular parallelepiped or approximately rectangular parallelepiped configuration. The heat exchange plate may include two oppositely disposed first surfaces and a plurality of second surfaces located between the two first surfaces, the area of the first surface being greater than the area of the second surface. The first surface of the heat exchange plate faces towards the first end wall 201 of the cylindrical battery 21. That is to say, the large surface of the heat exchange plate is an effective heat exchange surface. By setting the large surface of the heat exchange plate as the effective heat exchange surface, the heat exchange area is improved, and then the heat exchange efficiency is improved, effectively suppressing the temperature rise of the battery device.

The heat exchange plate is thermally connected to the first end wall 201 of the cylindrical battery 21, and the first end wall 201 of the cylindrical battery 21 coincides with the first surface of the heat exchange plate, i.e.. the front projection of the cylindrical battery 21 on the first surface of the heat exchange plate is located within the first surface. For example, the heat exchange plate directly abut against the second end face of the cylindrical battery 21. Alternatively, the heat exchange plate and the second end face of the cylindrical battery 21 are connected by thermally conductive glue.

The battery pack may further include a liquid collecting pipe in communication with the heat exchange plate. The liquid collecting pipe is configured for supplying a cooling medium to the heat exchange plate and collecting the heat exchange medium output from the heat exchange plate. When a plurality of heat exchange plates are disposed in the battery pack, the liquid collecting pipe may be connected to the plurality of heat exchange plates.

The ratio of the area of the first end wall 201 of the cylindrical battery 21 to the single-battery capacity ranges from 27 mm²/Ah to 130 mm²/Ah. The heat exchange plate 30 is thermally connected to the first end wall 201 of the cylindrical battery 21. That is to say, the cylindrical battery 21 radiates heat via the first end wall 201. When the ratio of the area of the first end wall 201 of the cylindrical battery 21 to the single-battery capacity is in the range of 27 mm²/Ah-130 mm²/Ah, on the one hand, the capacity of the unit battery is ensured, and on the other hand, the battery can radiate heat in time so as to avoid excessive temperature of the battery.

The bus member 40 may include a harness plate, a busbar 41, a temperature detection member and a circuit board. The harness plate is disposed on the second end wall 202 of the cylindrical battery 21 and opposite to the first end surface of the cylindrical battery 21. The busbar 41 is disposed on a side of the harness plate away from the cylindrical battery 21 (or the busbar 41 may be embedded in the harness plate). A connection hole is disposed on the harness plate. The cylindrical battery 21 is connected to the busbar 41 via the connection hole. The temperature detecting member for detecting the temperature of the cylindrical battery 21 may be disposed on the surface of the cylindrical battery 21 or disposed on the busbar 41. The circuit board is disposed on a side of the harness board away from the cylindrical battery 21, and the circuit board is connected to the temperature detecting member to transmit the temperature signal collected by the temperature detecting member.

The busbar 41 connects two adjacent cylindrical batteries 21 in the battery row 20. The busbar 41 may include a first bus portion and a second bus portion. Here, the first bus portion and the second bus portion are connected. The first bus portion is connected to a first battery, the second bus portion is connected to a second battery, and the first battery and the second battery are two adjacent cylindrical batteries 21 in the battery row 20.

The busbar 41 are connected in series with the adjacent cylindrical batteries 21 in the battery rows 20. When the two electrode ends of the cylindrical batteries 21 are a pole 212 and a housing 211 respectively, the first bus member may be connection portion of the housing 211, and the second bus member may be a connection portion of the pole 212. The first bus portion is connected to the housing 211 of the first battery, and the second bus portion is connected to the pole 212 of the second battery. When the two electrode terminals of the cylindrical battery 21 are a first pole and a second pole, respectively. The first bus portion is connected to the first pole of the first battery and the second bus portion is connected to the second pole of the second battery. Of course, in practice, the busbar 41 may also be connected in parallel with the cylindrical batteries 21 in the battery row 20, and the examples of the present disclosure are not limited thereto.

The harness plate is an insulating plate to realize insulation of the busbar 41 and the cylindrical battery 21, and the circuit board and the cylindrical battery 21. For example, the harness plate may be made of plastic, rubber, or ceramic. The harness plate may have a plate-like structure, or the harness plate may have a film structure, or the like. The circuit board may be a FPC or a PCB.

The temperature acquisition member may include a temperature transmission piece and a temperature sensor. The temperature transmission piece may be a nickel piece. One end of the nickel piece is connected to the housing 211 or the busbar 41 of the cylindrical battery 21, and the other end of the nickel piece is connected to the temperature sensor. The temperature sensor is disposed on the circuit board. Alternatively, the temperature acquisition member may include a temperature sensor and a transmission harness. The temperature sensor is disposed in the housing 211 or the busbar 41 of the cylindrical battery 21. The temperature sensor is connected to the circuit board via the transmission harness, and transmits a temperature signal to the circuit board via the transmission harness.

The limit plate 50 is configured for limiting the battery, a plurality of accommodating portions are disposed on the limit plate 50. The accommodating portions are arc-shaped recesses, and the peripheral wall 203 of the cylindrical battery 21 is connected to the accommodating portions. The accommodating portion may be formed by profiling the peripheral wall 203 of the cylindrical battery 21 embedded in the accommodating portion. As an example, the accommodating portions are respectively provided on both sides of the limit plate 50. The limit plate 50 is a metal piece with a large structural strength, a small arc processing difficulty and a high thermal conductivity coefficient facilitating heat conduction.

In some possible embodiments, as shown in Fig. 4, the limit plate 50 includes a body portion 51 positioned between adjacent battery rows 20, and an extension portion 52 disposed at an end of the body portion 51 in the column direction of the battery row 20. The extension portions 52 are disposed at both ends of the body portion 51 in the column direction of the battery row 20. For example, a first extension portion 52 and a second extension portion 52 are respectively provided at both ends of the body portion 51, the first extension portion 52 extending to a structural beam opposite to one end of the battery row 20, and the second extension portion 52 extending to a structural beam opposite to the other end of the battery row 20. That is, the extension portion 52 extends to an end beam, which is a structural beam located at an end of the plurality of structural beams in the column direction of the battery row 20.

Illustratively, the battery pack includes a first battery layer, a second battery layer and a limit plate 50 arranged between the first battery layer and the second battery layer. The extension portion 52 extends to the top surface of the end beam. The top surface of the end beam is the surface of the end beam away from the bottom plate 11. That is, the battery pack is composed of two battery rows 20 and a limit plate 50 between the two battery rows 20.

On this basis, the height of the border 12 may coincide with the height of the battery row 20 such that the extension portion 52 extends in a direction parallel to the bottom plate 11 and can overlap to the top surface of the end beam. The extension portion 52 is extended to the top surface of the end beam to shield the gap between the battery row 20 and the end beam, thereby preventing metal impurities from falling into the gap between the battery row 20 and the end beam and reducing the failure rate of the battery device.

When the extension portion 52 is positioned on the top surface of the end beam, and the extension portion 52 is protruded from the top surface of the end beam, the extension portion 52 is easily damaged by collision with other devices in the box 10. To avoid this problem, a groove is provided in the top surface of the end beam, and the extension portion 52 is embedded in the groove.

The depth of the groove may coincide with the thickness of the extension portion 52, or the depth of the groove may be slightly less than the thickness of the extension portion 52. The depth of the groove is the dimension of the groove in the direction perpendicular to the bottom plate 11, and the thickness of the extension portion 52 is the dimension of the extension portion 52 in the direction perpendicular to the bottom plate 11.

Both upper and lower sides of the body portion 51 are provided with battery rows 20. The body portion 51 is respectively insulated from the two battery rows 20 in order to achieve insulation between adjacent battery rows 20 and improve the safety of the battery device. The body portion 51 may be made of an insulating material. For example, the material of the body portion 51 may be plastic, rubber, ceramic and the like. Alternatively, an insulating layer may be provided on the surface of the body portion 51, and the insulation of the body portion 51 and the battery row 20 may be achieved by the insulating layer.

Illustratively, the body portion 51 includes a support layer, a first insulating layer disposed on a side of the support layer adjacent to the bottom plate 11, and a second insulating layer disposed on a side of the support layer away from the bottom plate 11.

Here, the support layer may be a metal layer. For example, the material of the support layer may be stainless steel or an aluminum alloy. The support layer of a metal material ensures the strength of the support layer. The first insulating layer and the second insulating layer are respectively disposed on two sides of the body portion 51. The first insulating layer and the second insulating layer may be adhered to the support layer, or the first insulating layer and the second insulating layer may be coated on the support layer.

The cylindrical batteries 21 in the battery rows 20 on both sides of the limit plate 50 are respectively adhered to the limit plate 50. By way of example, the first insulating layer is disposed on a side of the support layer away from the bottom plate 11, and a second insulating layer is disposed on a side of the support layer close to the bottom plate 11. The first battery layer is disposed on a side of the first insulating layer away from the support layer, and the second battery layer is disposed on a side of the second insulating layer away from the support layer. The cylindrical battery 21 in the first battery layer is bonded to the first insulating layer, and the cylindrical battery 21 in the second battery layer is bonded to the second insulating layer.

Optionally, the first insulating layer and the second insulating layer may be an insulating glue layer. That is, the first insulating layer is used for both insulating the first battery layer and the support layer and bonding the first battery layer and the support layer. The second insulating layer is used for both insulating the second battery layer and the support layer and bonding the second battery layer and the support layer.

The extension portion 52 and the support layer are connected, and the extension portion 52 and the support layer are of an integrally formed structure. Note that the first insulating layer and the second insulating layer in the examples of the present disclosure are not limited to covering only the support layer. In some embodiments, the first insulating layer and the second insulating layer may also cover the extension portion 52.

Optionally, the ratio of the thickness of the heat exchange plate 30 to the length of the cylindrical battery 21 ranges from 1/100 to 1/8. The thickness of the heat exchange plate 30 is the dimension of the heat exchange plate 30 in the axial direction. The length of the cylindrical battery 21 is the dimension of the cylindrical battery 21 in the axial direction. The heat exchange plate 30 is opposite to the first end wall 201 of the cylindrical battery. The longer the cylindrical battery is, the longer the axial heat transfer path in the single battery is. If the ratio of the thickness of the heat exchange plate 30 to the length of the cylindrical battery 21 is too large, the heat exchange plate 30 is too thick relative to the length of the cylindrical battery 21. The temperature difference between the temperature of the cylindrical battery 21 close to the second end wall 202 and the temperature close to the first end wall 201 will be too large, which is not conducive to the in the single battery. If the ratio of the thickness of the heat exchange plate 30 to the length of the cylindrical battery 21 is too small, the heat exchange plate 30 is too thin relative to the length of the cylindrical battery 21. The long heat exchange plate 30 of the cylindrical battery is thin, and the cooling effect of the heat exchange plate 30 on the long battery is insufficient. The heat exchange plate 30 is a heat exchange plate, and the heat exchange plate has a flat plate structure.

The ratio of the thickness of the bus member 40 to the length of the cylindrical battery 21 ranges from 1/250 to 3/160, and the thickness of the bus member 40 is the dimension of the bus member 40 in the axial direction. The ratio of the thickness of the bus member 40 to the length of the cylindrical battery 21 is too large, which indicates that the bus member 40 is too thick relative to the length of the cylindrical battery 21. Although it meets the flow area, it is not conducive to the weight reduction and space utilization of the whole package. The ratio of the thickness of the bus member 40 to the length of the cylindrical battery 21 is too small, which indicates that the bus member 40 is too thin relative to the length of the cylindrical battery , the overcurrent effect is too poor and the strength of the bus member is insufficient. The pulling of the bus member 40 by the vibration of a plurality of long batteries with different amplitudes along the axial direction of the battery may easily cause the deformation or even local thinning of the bus member 40, and the over size and excessive overheat of the resistance at the later thinning position may easily cause thermal runaway. Among other things, the bus member 40 may be a conductive bar.

The ratio of the thickness of the bus member 40 to the thickness of the heat exchange plate 30 ranges from 1/25 to 3/4. Both the bus member 40 and the heat exchange plate 30 are arranged along the axial direction of the cylindrical battery 21. By setting the ratio of the thickness of the bus member 40 to the thickness of the heat exchange plate 30 to be in the range of 1/25 to 3/4, the structural balance of the bus member 40 and the heat exchange plate 30 is achieved, and the space utilization rate and the overcurrent and cooling effects can be improved.

The example of the present disclosure provides a battery pack, including a box 10, a battery row 20, a heat exchange plate 30, a bus member 40 and a limit plate 50. The box 10 has a bottom plate 11. The battery row 20 is disposed in the box 10, and the axis of the cylindrical battery 21 in the battery row 20 is parallel to the bottom plate 11. The cylindrical battery 21 has a non-coplanar first end wall 201, a second end wall 202 and a peripheral wall 203. The heat exchange plate 30 is disposed on a side of the first end wall 201 of the cylindrical battery 21, and the bus member 40 is disposed on a side of the second end wall 202 of the cylindrical battery 21. The limit plate 50 is disposed on a side of the peripheral wall 203 of the cylindrical battery 21. That is to say, the bus member 40 and the heat exchange plate 30 are disposed on different sides of the cylindrical battery 21, so that condensation on the heat exchange plate 30 is prevented from flowing to the bus member 40, and the risk of short circuit of the battery pack is reduced. The bus member 40 and the heat exchange plate 30 are disposed on different sides, so that we solve the problem that the bus member 40 made of a metal material is subjected to repeated temperature differences on the same side of the bus member 40 and the heat exchange plate 30, and the generated metal fatigue is not conducive to improving the reliability of the high-voltage connection. The further heat exchange plates 30, the bus member 40 and the limit plate 50 are respectively located on different sides of the cylindrical battery 21, avoiding the problem that the heat exchange plate 30, the bus member 40 and the limit plates 50 interfere with each other when the battery pack is assembled. The different side arrangements of the limit plate 50 and the bus member 40 solve the problem that when the limit plate 50 and the bus member 40 are arranged at the same side, the limit plate 50 is required to be made of an insulating material due to the insulation requirements between the busbar 41 and the limit plate 50, thus resulting in a low strength of the limit plate 50 (the strength of the insulating material is often lower than that of the metal material). This improves the strength of the limit plate 50, and thus improves the stability of the internal structure of the battery pack. The arrangement of the limit plate 50 and the heat exchange plate on different sides solves the problem of poor structural stability of the battery pack caused by the arrangement of the heat exchange plate and the limit plate 50 on the same side, and improves the structural stability of the battery pack. Arranging the axis of the cylindrical battery 21 in parallel with the bottom plate 11 can effectively reduce the height of the battery pack, thereby facilitating control of the size of the vehicle chassis in the height direction.

The battery pack provided by the examples of the present disclosure may be applied to an electric vehicle on which the battery pack is mounted to supply energy to the electric vehicle. In practice, the battery pack may be mounted to the frame of the electric vehicle. The battery pack may be fixedly connected to the vehicle frame. Alternatively, the battery pack may be a modular battery pack which can be removably connected to the vehicle body for replacement.

Other embodiments of the disclosure will be apparent to those skilled in the art from consideration of the description and practice of the invention disclosed herein. This application is intended to cover any variations, uses, or adaptations of the disclosure following the general principles of the disclosure and including common knowledge or customary technical means in the art which are not disclosed in the present disclosure.

## Claims

1. A battery pack, **characterized in that** the battery pack comprises:
a box (10);
at least one battery row, wherein the battery row is disposed in the box (10); the battery row comprises a plurality of sequentially arranged cylindrical batteries (21); an axis of the cylindrical battery (21) is parallel to a bottom of the battery box (10); a positive pole output end and a negative pole output end of the cylindrical battery (21) are disposed on a same side of the cylindrical battery (21);
a heat exchange plate (30) configured for exchanging heat with the battery;
a bus member (40) configured for electrically connecting the plurality of cylindrical batteries (21); and
a limit plate (50) configured for limiting the battery in a direction perpendicular to the axis;
wherein the cylindrical battery (21) has a first end wall (201) and a second end wall (202) disposed opposite to each other, and a peripheral wall (203) located between the first end wall (201) and the second end wall (202); the heat exchange plate (30) is disposed opposite to the first end wall (201); the bus member (40) is disposed opposite to the second end wall (202); and the limit plate (50) is disposed opposite to the peripheral wall (203).

2. The battery pack according to claim 1, **characterized in that** the box (10) has a bottom plate (11); and the axis of the cylindrical battery (21) is parallel to the bottom plate (11).

3. The battery pack according to claim 2, **characterized in that** the cylindrical battery (21) is a lithium iron phosphate battery; and a dimension of the cylindrical battery (21) along the axis is greater than or equal to 60 mm.

4. The battery pack according to claim 2, **characterized in that** the cylindrical battery (21) has a dimension L along the axis; the battery pack has a dimension H along a height direction; and the height direction is perpendicular to the bottom plate (11), and L > H.

5. The battery pack according to claim 1, **characterized in that** the cylindrical battery (21) is provided with an explosion proof valve; and the explosion proof valve is not provided at the first end wall (201) of the cylindrical battery (21).

6. The battery pack according to claim 1, **characterized in that** a pole and the explosion proof valve of the cylindrical battery (21) are both disposed at the second end wall (202).

7. The battery pack according to claim 1, **characterized in that** a plurality of accommodating portions are provided on the limit plate (50); the accommodating portions are arc-shaped recesses; and a peripheral wall (203) of the cylindrical battery (21) is connected to the accommodating portions.

8. The battery pack according to claim 1, **characterized in that** a ratio of an area of the first end wall (201) of the cylindrical battery (21) to the single-battery capacity ranges from 27 mm²/Ah to 130 mm²/Ah.

9. The battery pack according to claim 1, **characterized in that** a ratio of a thickness of the heat exchange plate (30) to a length of the cylindrical battery (21) ranges from 1/100 to 1/8; the thickness of the heat exchange plate (30) is a dimension of the heat exchange plate (30) in an axial direction; and the length of the cylindrical battery (21) is a dimension of the cylindrical battery (21) in the axial direction.

10. The battery pack according to claim 1, **characterized in that** a ratio of a thickness of the bus member (40) to a length of the cylindrical battery (21) ranges from 1/250-3/160; the thickness of the bus member (40) is a dimension of the bus member (40) in an axial direction, the length of the cylindrical battery (21) is a dimension of the cylindrical battery (21) in the axial direction.

11. The battery pack according to claim 1, **characterized in that** a ratio of a thickness of the bus member (40) to a thickness of the heat exchange plate (30) ranges from 1/25-3/4; the thickness of the heat exchange plate (30) is a dimension of the heat exchange plate (30) in an axial direction; and the thickness of the bus member (40) is a dimension of the bus member (40) in the axial direction.

12. The battery pack according to claim 1, **characterized in that** the heat exchange plate (30) has a flat plate structure; and the heat exchange plate (30) is provided with a flow passage for transporting a heat exchange medium.

## Amended claims

### Amended claims in accordance with Rule 137(2) EPC.

1. A battery pack, comprising:
a box (10);
at least one battery row, wherein the battery row is disposed in the box (10); the battery row comprises a plurality of sequentially arranged cylindrical batteries (21); an axis of the cylindrical battery (21) is parallel to a bottom of the battery box (10); a positive pole output end and a negative pole output end of the cylindrical battery (21) are disposed on a same side of the cylindrical battery (21);
a heat exchange plate (30) configured for exchanging heat with the battery;
a bus member (40) configured for electrically connecting the plurality of cylindrical batteries (21); and
a limit plate (50) configured for limiting the battery in a direction perpendicular to the axis;
wherein the cylindrical battery (21) has a first end wall (201) and a second end wall (202) disposed opposite to each other, and a peripheral wall (203) located between the first end wall (201) and the second end wall (202); the heat exchange plate (30) is disposed opposite to the first end wall (201); the bus member (40) is disposed opposite to the second end wall (202); and the limit plate (50) is disposed opposite to the peripheral wall (203),
wherein the battery pack is **characterized in that**
the axis of the cylindrical battery (21) refers to a rotational symmetry axis of the cylindrical battery (21),
the box (10) has a bottom plate (11); and the axis of the cylindrical battery (21) is parallel to the bottom plate (11),
the cylindrical battery (21) has a dimension L along the axis; the battery pack has a dimension H along a height direction; and the height direction is perpendicular to the bottom plate (11), and L > H.

2. The battery pack according to claim 1, **characterized in that** the cylindrical battery (21) is a lithium iron phosphate battery; and a dimension of the cylindrical battery (21) along the axis is greater than or equal to 60 mm.

3. The battery pack according to claim 1, **characterized in that** the cylindrical battery (21) is provided with an explosion proof valve; and the explosion proof valve is not provided at the first end wall (201) of the cylindrical battery (21).

4. The battery pack according to claim 1, **characterized in that** a pole and the explosion proof valve of the cylindrical battery (21) are both disposed at the second end wall (202).

5. The battery pack according to claim 1, **characterized in that** a plurality of accommodating portions are provided on the limit plate (50); the accommodating portions are arc-shaped recesses; and a peripheral wall (203) of the cylindrical battery (21) is connected to the accommodating portions.

6. The battery pack according to claim 1, **characterized in that** a ratio of an area of the first end wall (201) of the cylindrical battery (21) to the single-battery capacity ranges from 27 mm²/Ah to 130 mm²/Ah.

7. The battery pack according to claim 1, **characterized in that** a ratio of a thickness of the heat exchange plate (30) to a length of the cylindrical battery (21) ranges from 1/100 to 1/8; the thickness of the heat exchange plate (30) is a dimension of the heat exchange plate (30) in an axial direction; and the length of the cylindrical battery (21) is a dimension of the cylindrical battery (21) in the axial direction.

8. The battery pack according to claim 1, **characterized in that** a ratio of a thickness of the bus member (40) to a length of the cylindrical battery (21) ranges from 1/250-3/160; the thickness of the bus member (40) is a dimension of the bus member (40) in an axial direction, the length of the cylindrical battery (21) is a dimension of the cylindrical battery (21) in the axial direction.

9. The battery pack according to claim 1, **characterized in that** a ratio of a thickness of the bus member (40) to a thickness of the heat exchange plate (30) ranges from 1/25-3/4; the thickness of the heat exchange plate (30) is a dimension of the heat exchange plate (30) in an axial direction; and the thickness of the bus member (40) is a dimension of the bus member (40) in the axial direction.

10. The battery pack according to claim 1, **characterized in that** the heat exchange plate (30) has a flat plate structure; and the heat exchange plate (30) is provided with a flow passage for transporting a heat exchange medium.
